# FASCICULE DE BREVET EUROPEEN

(11) **EP 0 862 521 B1**
(45) Date de publication et mention de la délivrance du brevet: **05.04.2000**
(21) Numéro de dépôt: 97909403.4
(22) Date de dépôt: 13.10.1997
(51) Int. Cl.: B60K 15/03

(54) **RESERVOIRS TORIQUES DE SECURITE POUR GAZ DE PETROLE LIQUIFIE POUR VEHICULES A BICARBURATION**
TOROIDFÖRMIGER FLÜSSIGGASSICHERHEITSTANK FÜR FAHRZEUGE MIT ZWEI BRENNSTOFFSYSTEMEN
SAFETY TORIC TANKS FOR LIQUEFIED PETROLEUM GAS FOR VEHICLES WITH DUAL-FUEL CARBURATION

(30) Priorité: 11.10.1996 FR 9612466; 29.11.1996 FR 9614635; 17.09.1997 FR 9711546
(43) Date de publication de la demande: 09.09.1998
(73) Titulaire: Barabino, Alphonso, 94300 Vincennes (FR); Barabino, Yves, 94300 Vincennes (FR)
(72) Inventeur: Barabino, Alphonso, 94300 Vincennes (FR); Barabino, Yves, 94300 Vincennes (FR)
(86) Numéro de dépôt international: FR9701830
(87) Numéro de publication internationale: WO9816403

(56) Documents cités:
- EP-A- 0 042 887
- WO-A-94/29639
- WO-A-97/09561
- NL-A- 7 703 630

## Description

L'objet de la présente invention est le réservoir de securité torique ou cylindrique ou de toute autre forme apte à s'inscrire dans des espaces disponibles du chassis, pour gaz de pétrole liquéfié dit GPL pour l'alimentation des moteurs d'automobiles à bicarburation, où le torique notamment, est destiné dans la plupart des cas, à être installé dans l'emplacement du pneu de secours.

Les réservoirs habituels pour GPL, sont munis d'une vanne de service dite "polyvanne" contenant les vannes non retour pour le remplissage du réservoir et celles d'alimentation du moteur et indicateur de niveau et rarement d'une vanne de surpression vu l'exiguité de l'espace disponible, ce qui en rend difficile la réalisation tant au niveau du constructeur que de l'installateur. En effet tous ces éléments sont soudés séparément à une certaine distance l'un de l'autre, à cause des soudures périphériques sur chacun. Même difficulté pour la réalisation des orifices correspondants sur ces réservoirs, du fait qu'ils diminuent la résistance du réservoir, aussi lorsque l'on adopte les encombrantes et lourdes plaques classiques contraires à l'esprit du progrès d'allegement pour économiser de l'énergie et sauvegarder l'énvironnement.

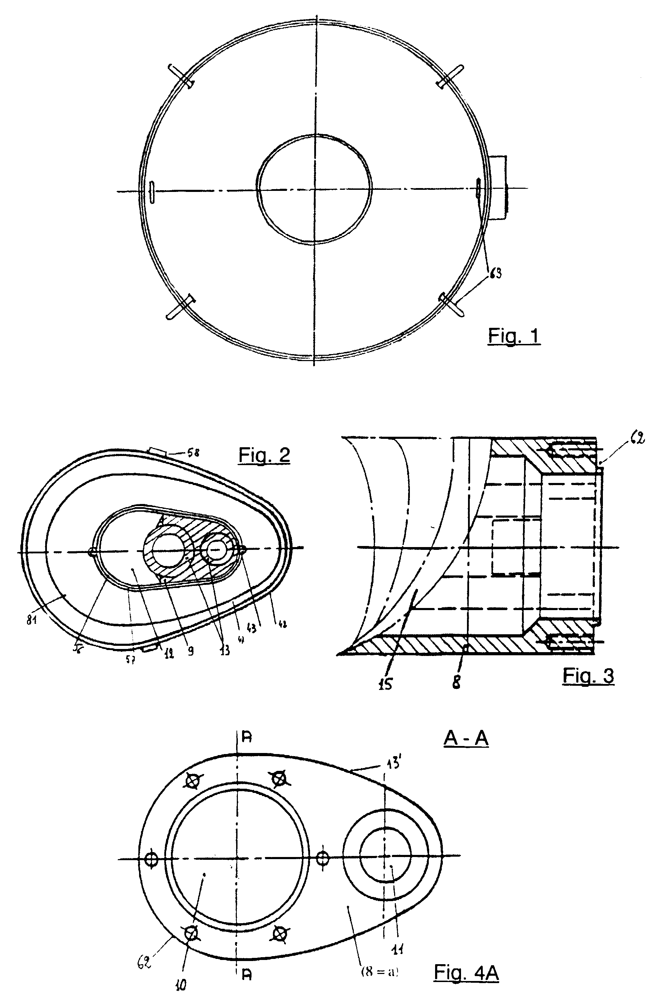

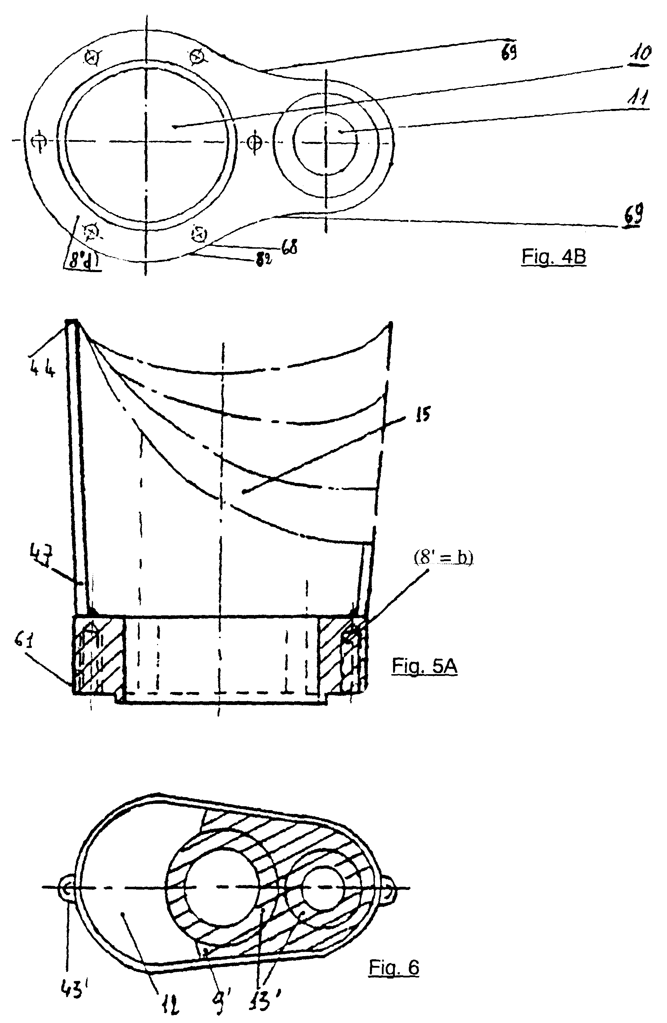

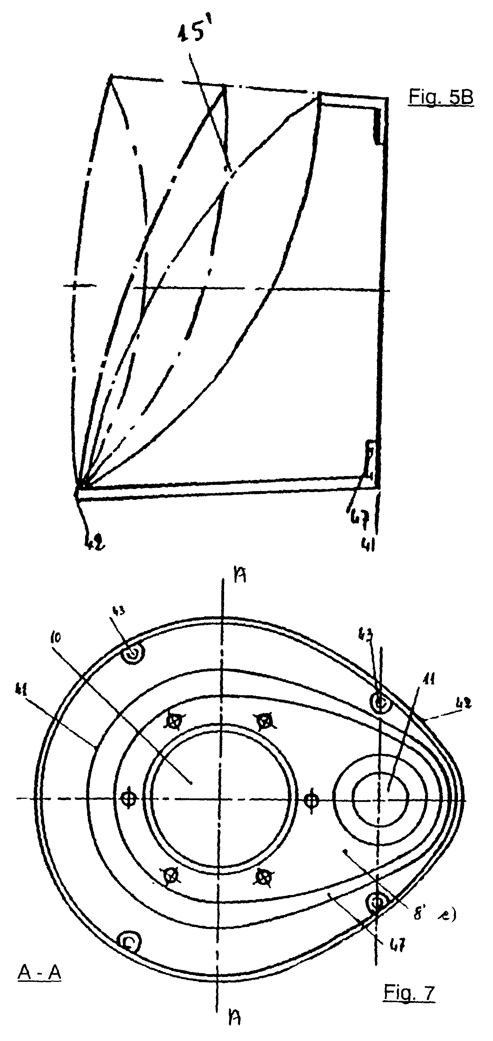

Le but de notre demande de brevet, est la construction d'un réservoir torique ou de tout autre forme apte à s'inscrire dans des éspaces disponibles du chassis et qui soit vraiment de sécurité, permettant l'installation d'une polyvanne et d'une vanne de sécurité à proximité immédiate. But réalisé aussi grâce à un seul embout de sortie multiple formant bride, portant simultanément l'orifice d'une polyvanne et celui d'une vanne de sécurité offrant peu de résistance au gaz et qui puisse être monté par un seul petit orifice. De forme elliptique ou mieux ovale autour des circonférences de diamètre différent des deux vannes susdites (10 et 11) et avec des parois évasées (42 fig.7 ou 44 fig 8 et 5)ou droites (8) fig.3 et (68) fig.4bis, lui permettant:
I - a), b),d) - soit dans les versions mâle fig 3, 4A,4B,5A (8= a,8'= b, 47= c,8"=d), de partir comme une appendice dépassant le réservoir vers l'extérieur et d'avoir (47) leurs embases (62 et 61), prédisposées pour récevoir la polyvanne (10) et la soupape de surpression (11) dirigée aussi vers l'extérieur fig 8. La version 8" d) a les contours de sa platine (82) entre les deux orifices (10 et 11) étranglés (69), tandis que les versions a) et b) sont parfaitement ovales, les fig. 35A représentent en coupe, quelques possibilitées de realisation des mêmes, soit par fusion, emboutissage ou mixte des brides ou de leurs platines a), b) et d) ainsi que de la platine de l'ensemble femelle qui suit;
II - c)- soit dans la version femelle fig 7 (47= c), de rentrer vers l'intérieur du même réservoir dans une seule découpe duquel cet ensemble serait positionné et soudé autour de sa bordure creuse et ovale (42). Dans ce type d'assemblage femelle, la platine ou embase (43) serait disposée sur le fond intérne, qui est un peu majoré autour du grand orifice (10) de la polyvanne (47) afin de pouvoir facilement l'y installer avec ses raccords.

Donc cet ensemble dans la version mâle, aura la circonférence de son bord oval (44) inférieure à celle (22) de la version femelle et dont le fond intérieur (41) contenant la platine (61/62) sera identique (44=41).

La fig5A montre la bride multiple mâle b) et d) composée par deux pièces soudées, la collerette (47 ou 42 ou bien 44) et les platines (61 et 86), tandis que les fig. 3 et 8 montrent les trois versions a) b) et d) en une seule pièce, la fig. 5B montre la collerette (47) prévue pour la bride rentrante femelle aussi bien que pour l'utilisation comme capot étanche une fois complété par la base de la prise emboitable femelle, toutes pouvant être obtenues par emboutissage fig. 5 B pour les versions (42, 44 et 81), coulée Fig.3, 4A, 4B ou mixte fig.5A aussi bien que la version femelle c).

Dans tous les cas les bords de la bride, suivront la découpe de la forme dictée par sa position sur le réservoir ou sa conformation même.

D'autre part la version ensemble femelle rentrante c), peut former chambre étanche grâce à la fixation sur son bord externe (42 et 15') d'un couvercle oval et coupé selon la découpe du réservoir (15') avec des joints d'étanchéité, en polycarbonate transparent ou pas, en deux parties , la (50) plus petite et sur la pointe de l'ove au dessus de la soupape de surpression et comportant deux embouts (53) pour les tuyaux d'aération destinés à faire comuniquer indirectement la chambre étanche avec l'extérieur de l'habitacle et l'air libre et aussi au passage à leur intérieur des tuyaux de remplissage et alimentation en GPL. Ce couvercle (50) est fixé par deux vis (52) munies aussi de petits joints et une fois installé , restera normalement à demeure.

Du coté plus large de l'ove, un encastrement (51) permets au couvercle (49) de s'encastrer sous le demi couvercle (50) pour s'y fixer à l'aide de la vis opposée (52). Le demi couvercle (49) sera ainsi facilement amovible et sera notamment en polycarbonate transparent et toujours muni d'un couvercle d'étanchéité ; il permettra ainsi de surveiller visuellement de l'extérieur le bon fonctionnement et remplissage par la polyvanne, ou manuellement intervenir l'enlevant en dévissant la ou les vis (52) ou autre fermeture rapide à levier qui la fixera avec l'encastrement (51), celle-ci munie aussi d'un joint d'étanchéité.

Dans le cas où cet ensemble mâle ou femelle, bien que dans cette position normalement on retrouvera la version mâle (44), soit disposé en bas du réservoir, la vanne de sécurité est prolongée d'un tuyau courbé (14) dirigé vers le haut appelé "reniflard" pour être situé en extrémité, au niveau de la zone de la phase gazeuse située au dessus de la phase liquide du carburant en GPL, ce qui représente environs 15% du volume total pour cette phase gazeuse. Lorsque cet ensemble est positionné en haut du réservoir, l'orifice de la soupape de surpression (11) n'aura normalement pas besoin (et dans la plupart des cas) du tuyau reniflard (14) se trouvant et communiquant déjà directement dans la phase gazeuse de 15 % du carburant GPL servant d'amortisseur et propulseur du GPL liquide (normalement 85 %) par l'entremise de la polyvanne qui est dotée d'un tuyau angulé afin de pecher au fond du réservoir.

L'embout vu de la face extérieure ou de sa face interne présente donc une forme d'ensemble d'ove qui caracterise toute notre invention et se rétrécit autour de la surface de diamètre inférieur de la vanne de sécurité. La surface antérieure affleurante (15) de l'embout rentrant dans le réservoir que nous appelons "bride multiple à chambre étanche ", vue du côté extérieur, présente une forme convexe (15') incurvée de façon correspondante à la courbe du réservoir vu de l'extérieur. Le réservoir qui en résulte, est ainsi facile, sûr et économique à construire par la réalisation d'une seule découpe dans celui-ci. En effet il suffira ensuite d'une seule soudure périphérique autour de l'ensemble multiple monobloc. Ceci rend possible l'usage de la soupape de surpression ainsi placée immédiatement à côté de la polyvanne, le tout dans un éspace et un poids très limité. Chose très importante vu que l'on opère dans l'espace très limité de l'emplacement du pneu de secours sur un véhicule qui doit garder son equilibre ponderal avant/arrière pour sa stabilité. Ainsi aussi bien la fabrication que le montage du réservoir sera grandement facilité, accélerée et plus sûr vu que la totalité des vannes (polyvanne et soupape de surpression) pourront facilement être installées soit hors de l'habitacle, ou y comuniquer lorsqu'il sera doté de l'ensemble "bride multiple à chambre étanche" à son intérieur, mais qui comunique avec l'air libre grâce aux embouts (53) de son couvercle étanche.

Dans la présente invention nous avons donc 4 differents modèles de brides dont trois mâles (a, b et d) et une femelle c); les trois mâles conçues pour un montage notamment externe (dit interne/externe), soit les fig. 4A, 4B et 8 qui les montrent vues à plat de face, les fig. 5 A,3 en coupe axiale selon A-A des fig. 4A,4B et 8,variant aussi en fonction de la courbure du réservoir, formant chambre étanche avec son couvercle abattant amovible en deux parties (49/50) fig.11. Toutes, se prêtent à être réalisées par emboutissage aussi bien que coulées ou mixte.

Notre ensemble bride femelle, tout comme les mâles que l'on verra ensuite, se prête fort bien à l'application sur son couvercle d'étancheité, à sa partie (50) fig. 11, de l'ensemble à fiches, plus exactement de sa partie femelle (9), prévu pour s'accoupler à tenue étanche, avec le raccord à fiche mâle (9') Fig. 6 correspondant.

Ces deux raccords, amovibles à fiches, sont conçus pour permettre de déconnecter et d'énlever rapidement le réservoir de GPL de la voiture , ou de le reconnecter, pour toute nécessité avec grande facilité et pour une plus grande securité. Ceci grâce à ces raccords et leur bague/guide (56) dont la forme d'ove exclut de pouvoir les rebrancher inversés et comportant une gaine de ventilation (12) et deux tuyaux munis de joints d'étancheité pour le passage du GPL, celui d'alimentation et celui de remplissage (13), celà grâce aux joints étanches sous pression (13,54 et 57), aux bloquages (43) assurant leur tenue accouplés et l'étancheité des fluides ainsi que le raccordement par une prise éléctrique appropriée, des manomètres éventuels du tableau de bord. Des poignées et des supports latéraux de soutenement reglables en hauteur et largeur (63), sont prévus pour être adaptés au réservoir et ils pourront aider aussi cette operation en plus de sa fixation .

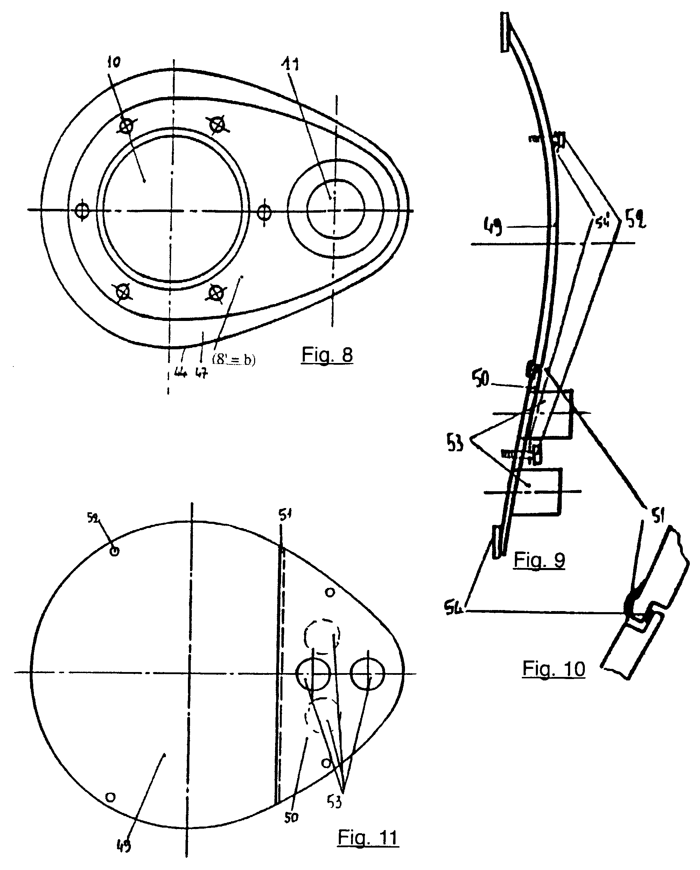

Pour les autres brides multiples mâles (dépassant le réservoir), nous avons conçu le capot en forme de cône avec base à circonférence ovale, mais qui pourra assumer d'autres formes pour mieux s'adapter à d'autres embouts, tronqué que la Fig. 2 montre de face d'en haut et les Fig. 5A,5B en section, prevu' pour être superposé à la bride en place et accroché au réservoir par les verrouillages (58) Fig 2 à ressort, à levier ou à vis ou aussi à collier de serrage ou autre. Ce capot composé des collerettes (42) Fig.2, ou (44/47 un peu élargie) avec leurs sommets fermés par la base (9 et 81) de la fiche emboitable femelle peut être appliqué au réservoir avec un joint étanche comme le (54) Fig.9, mais pas nécèssairement comme dans le cas où la bride serait extèrne. Dans sa surface ovale externe il est muni de l'ensemble (9) femelle de transmission de fluides déjà decrit plus haut, prévu pour s'accoupler rapidement et de façon étanche grâce au joint (57) situé autour de la bague/guide ovale (56) à sa prise ou raccord mâle correspondant (9') qui se raccorde à l'installation fixe et rigide, de la voiture par une gaine et des tuyaux souples performants.

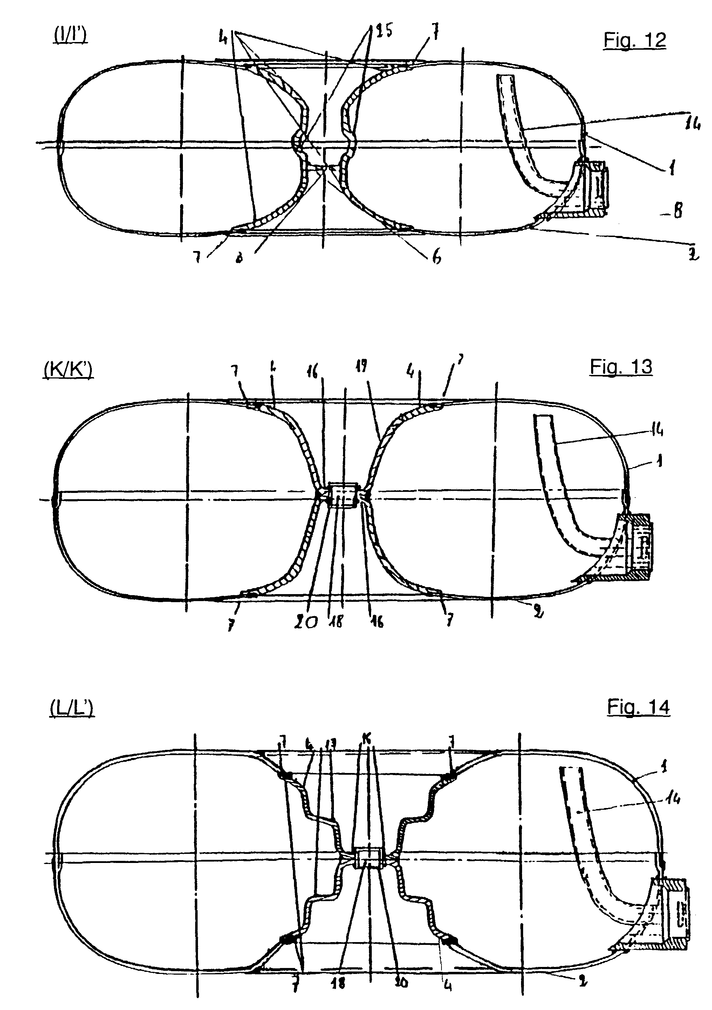

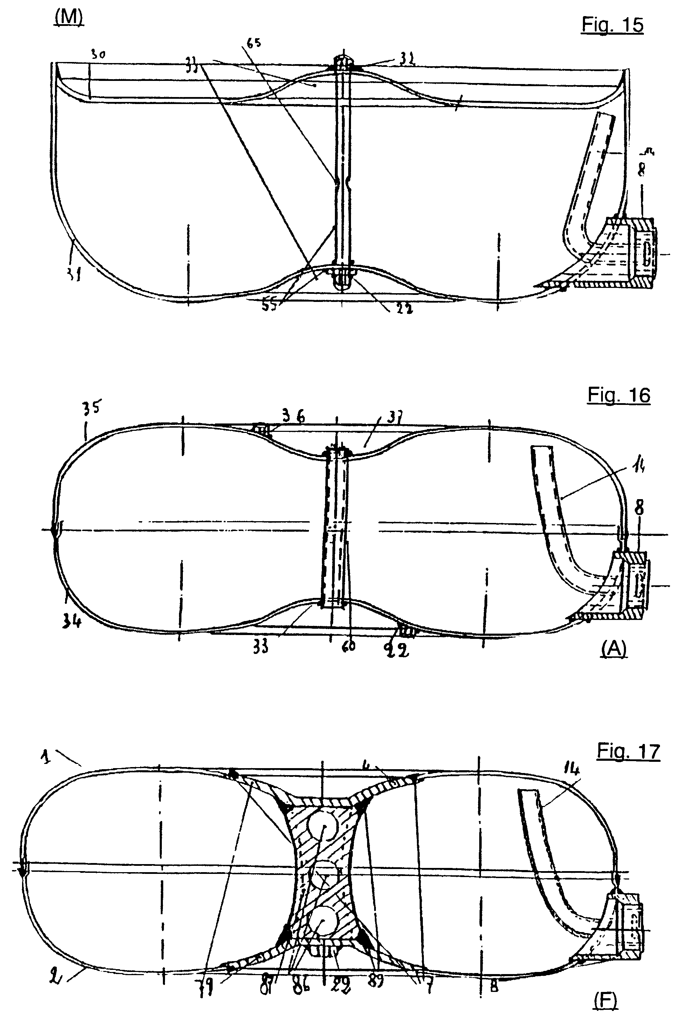

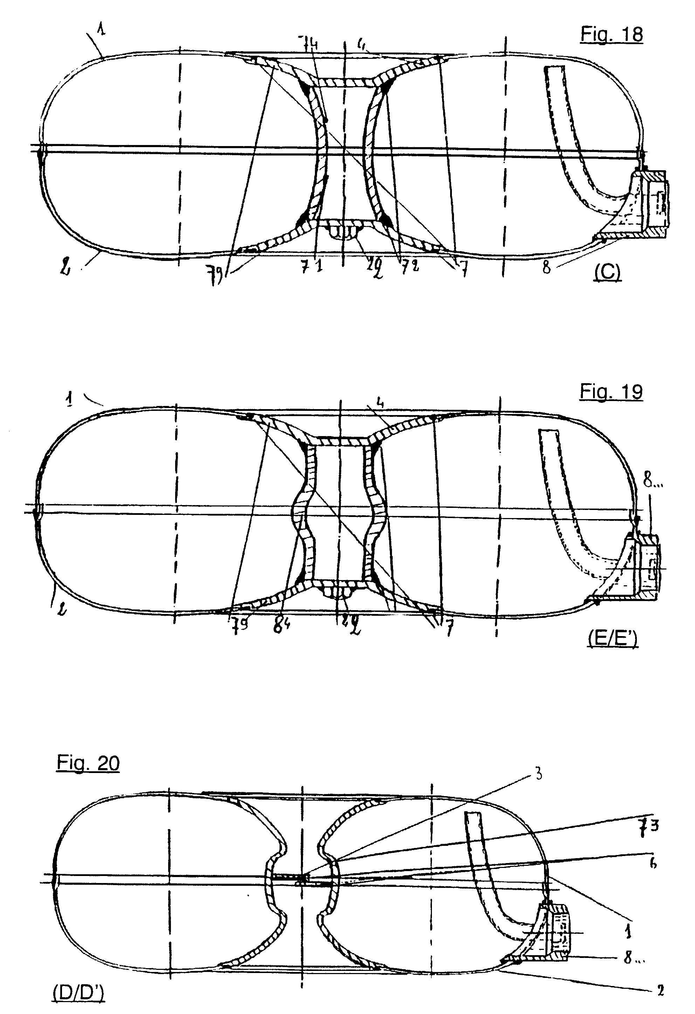

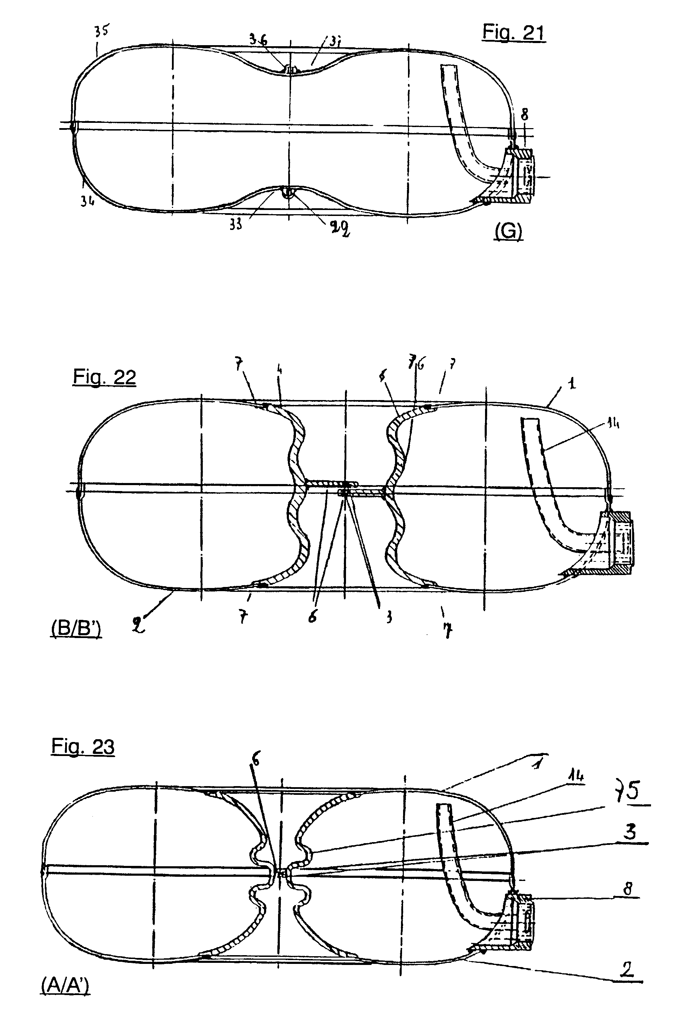

Les réservoirs objet de la présente invention sont illustrés par la fig. 1 présentant le réservoir torique pour GPL sur sa coupe selon l'axe vertical et par les fig. 12 à 23 en représentant déjà 12 et aussi les sept dérivés, de forme torique uniquement, les autre formes non toriques ou autres que circulaire que nous prévoyons dans la présente invention restant à materialiser selon les besoins de ce marché en pleine évolution, notamment des fabriquants de voitures, sont composés par deux demi-coquilles (1 et 2) ou deux entières (30/31 et 34/35), et d'une de nos nouvelles parties centrales qui introduisent, elles aussi comme les brides, une nouveauté technique par rapport aux autres réservoirs toriques existants grâce à la souplesse qu'élles fournissent par leurs formes (17,19, 25, 73, 74, 75, 76, 84, 87) aux réservoirs, leur donnant de surcroit la possibilité d'être allégés aussi grâce à des details comme les languettes d'accouplement (7) et grâce aussi à la facilité que nous offrons de généraliser l'usage de la soupape de surpression. Celà contribue de manière déterminante à la securité des réservoirs qui suivent, conçus suffisamment déformables pour mieux supporter des grandes pressions et permettre, si nécessaire, les dilatations prévues par les normes internationales; leur grande sécurité est accentuée du fait que leur montage sur les voitures, peut facilement l'être avec les vannes à l'air libre, directement ou indirectement, selon l'énsemble de bride choisi et sa position :
A - Réservoir torique de securité fig.23 de G.P.L. pour véhicules automobiles à double carburation caractérisé en ce qu'il est constitué par deux coquilles soudées (1,2) fig-2 et pour les compléter et unir, d'une partie centrale ayant le milieu de forme ondulaire un peu comme un arc dont la poignée serait marquée par une petite onde et les extrémitées évasées (4). Ces extrémitées comportent des languettes (7), prévues pour le parfait accouplement avec les bords intérieurs des susdites coquilles principales où se fait la soudure. La forme ondulée de cette partie centrale, un peu comme un arc (75), assure une dilatabilité et élasticité importantes à l'ensemble déjà rendu plus résistant par des soudures plus aisées et espacées et en particulier à la partie centrale soumise aux plus fortes pressions. A son milieu est soudée une double barre (6), avec des orifices superposés (3), permettant la fixation du réservoir par la tige filetée du logement du pneu de secours.
B - Reservoir torique caractérisé en ce qu'il comporte un élément central qui raccorde les coquilles, réalisé par emboutissage d'un tube d'acier d'épaisseur apte à garantir la dilatation maximale projetée dont a la fig.22 afin de créer autour de son axe, deux vagues d'ondes sensiblement sinusoïdales (76) disposées transversalement pour suivre les dilatations verticales. Réalisé en évasant (4), les deux extrémités d'une courbe de même rayon; au même point de jonction par les moules appropriés lui permettant d'épouser parfaitement les courbes des coquilles pour les soudures aux points (7), grace aux languettes (7) ici preuves.Il serà fixé à la tige filetée du logement du pneu de secours grâce aux pattes de fixation (6) portant les orifices superposés (3). Complétée par une de nos nouvelles quatre brides, cela crée le réservoir torique B selon la présente invention, notablement amélioré par rapport aux autres et même aux cylindriques.
C - Réservoir torique de securité comportant une partie centrale réalisée par deux soucoupes d'acier ou assiettes creuses (79) fig. 18, évasées (4) présentant à leurs bords des languettes d'accouplement (7), soudées (72) à un tube d'acier (74) évasé aux extrémitées (4) et convergeant au milieu (71).Une fois que cette partie centrale aura été soudée par ses languettes 7 aux deux coquilles principales habituelles 1,2 , pour la fixation dans le logement du pneu secours on soude au milieu du creux de l'assiette inférieure, le boulon (22). Une de nos nouvelles brides completera ce réservoir Frequemment celle-ci sera soudée parallèlement, près de la base; dans ces cas la polyvanne sera immergée dans le GPL et le reniflard (14) de la vanne de sécurité dirigé vers le haut, ou se trouve la surface gazeuse comme marqué en pointillé fig.18 et toutes deux dirigées directement à l'extérieur de l'habitacle chose impossible ou difficile chez les autres.
D et E- Réservoirs toriques de sécurité caractérisés en ce qu'ils comportent une partie centrale qui raccorde par ses languettes d'accouplement (7) les deux coquilles principales (1,2) réalisée soit:
D - par l'emboutissage d'un tube évasé (4) et avec une onde qui diverge au milieu sensiblement comme un arc avec une large poignée (73) fig.20, afin d'assurer au réservoir une grande déformabilité et élasticité. A son milieu sont soudées deux panes de fixation (6) présentant les orifices superposés (3) pour le passage de la tige de la loge pneu de sécours.
E E' - par deux assiettes creuses d'acier embouties (79) fig-19,évasées (4) soudées à un tube courbé d'une façon divergente à son milieu (84), assurant aussi une grande déformabilité et pour E' comportant des orifices (86) comme pour F; dans le creux de l'assiette du bas est normalement soudé le boulon de fixation (22). Nous obtenons les trois réservoirs des fig. 19 et 20 en soudant ces parties centrales aux deux coquilles (1,2) en leur soudant aussi à leur base horizontales,normalement une de nos buses pourra mettre les vannes directement à l'air libre pour plus de sécurité et de facilité d'installation.
F - Réservoir torique de sécurité caractérisé en ce qu'il comporte une partie centrale réalisée avec deux soucoupes d'acier embouties où assiettes creuses (79) fig.17,évasées (4) soudées à un tube central (87) évasé (89) et aux parois perforées (86), afin d'utiliser ce volume aussi et donc en augmenter la contenance. Ces trois éléments soudés ensemble, forment une partie centrale dont le tube contiendra du GPL et une fois soudée, en correrspondance des languettes d'accouplement (7) aux deux coquilles principales, nous obtenons un réservoir torique avec une contenance avantageuse de presque 100% du volume rempli de carburant écologique. Complété, bien sûr, avec une de nos buses ou brides multiples monobloc (8) et muni aussi généralement dans le creux de l'assiette du bas, le boulon de fixation (22). Avec sa grande déformabilité, il sera en grande correspondance avec les normes internationales, notamment par la mise à l'air libre des vannes aussi hors de l'habitacle ou pouvant y comuniquer indirectement si muni de notre ensemble femelle étanche.
G-H- Réservoirs toriques de sécurité innovants constitués de deux coquilles bombées entières (34 et 35) fig.21 soudées contrapposées avec parties de liaison incurvées et évasées. Avec des concavitées orientées dans le même sens vers le bas comme les (34 et 35) et inversement vers le haut la concavitées (34 et 37), ce qui augmente la réactivité de l'ensemble du réservoir par le jeu contrasté et décalé des courbes par rapport au gaz, ce qui le place en parfaite harmonie avec les normes R67 prises en compte dans le projet; sa grande contenance est unique. Ces réservoirs peuvent être munis d'un tuyau le traversant en son milieu en correspondance de son axe (60) fig. 16 ce qui donnerà la varsion H), le renforçant comme dans nos autres plus loin, permettant entre autre, le passage de la tige de fixation hatituelle du pneu, pouvant éventuellement être muni aussi des écrous -22 et 36) placés periphériquement des courbes internes ou externes et comme la tige susdite permettant la fixation au chassis du réservoir. Munis d'une de nos brides multiple monobloc, pouvant recevoir la vanne de sécurité et la polyvanne de service hors de l'habitacle en parfaite sécurité .
I - Ce réservoir est formé d'une demi coquille inférieure (2) soudée à une demi coquille supérieure (1) et à la partie centrale (25) de liaison renfort et fermeture.Cette partie centrale pourra être obtenue à partir d'un tube embouti pour former les extrémités évasées (4) qui peuvent éventuellement être munies des languettes (7) d'accouplément aux demi coquilles et la courbe ou onde de détente (25') fig.12, portant à son intérieur la patte de fixation (6), percée pour recevoir la tige de fixation existante dans le logement du pneu de secours et qui complétera et fermera les deux demi-coquilles (1 et 2), composant le réservoir A) avec le choix d'une de nos nouvelles brides, mâles si l'emploi sera interne vers l'externe les vannes sortant de l'habitacle, ou femelle si les vannes ne peuvent pas sortir. Sa fixation, comme pour les autres, pourrà être assurée aussi, par des écrous (22 et 36) periphériques aux courbes.
K - L) - Réservoirs de securité composés de deux demi-coquilles (1,2) et des parties centrales (19 et 17) formées à partir de deux rondelles de tôle embouties en deux cônes identiques évasés aux bords extérieurs (4) munis éventuellement des languettes d'accouplement (7), avec les parties médianes (19) fig. 13 et (17) fig.14 qui se rétrécissent graduellement comme des cônes ayant les pointes tronquées, mais fermées par leurs surfaces circulaires (16) soudées ensemble périphériquement, dont les parois (19) sont lisses sur B) fig 13 et embouties en ondes ou gradins circonférenciels arrondis et décroissants (17) sur C) fig. 14, l'ensemble assumant un peu la forme d'un sablier. Au milieu des cercles susdits, est pratiqué un orifice (18), renforcé par un tube (20) permettant notamment le passage de la tige de fixation existante dans le logement du pneu de secours ainsi que les tuyaux d'alimentation et d'aération. Normalement sur la demi coquille inférieure, est réalisée une découpe ou est soudée une des nouvelles brides multiples munies d'un orifice (10) pour la polyvanne et d'un orifice plus petit (11) pour la vanne de sécurité qui grâce au reniflard (14) dirigé vers le haut communiquera avec la phase gazeuse qui est de 15% du volume du carburant contenu. Cette phase gazeuse formant propulseur et amortisseur de la phase liquide contenue de GPL. Des moyens d'ancrage supplementaires sont possibles comme les écrous (22 ou 36 si necéssaire) prevus sur la base ou sur les cotés periphériquément aux courbes.
A',B',D',I',K' et L' - Les parties centrales de ces six réservoirs, toriques ou pas des 6 fig.12,13, 14,20, 22, 23 soit (17, 19 ,25, 73, 75 et 76) qui précedent, peuvent être fermées par deux disques soudés aux parties plus externes des évasements (4) supérieur et inférieur percés (86) pour augmenter la contenance de carburant un ^peu comme pour F, et en disposant au milieu sur l'axe,un tuyau étanche les traversant (60), afin de permettre le passage de la tige de fixation du pneu de secours, et d'elements d'installation ulterieure sur les voitures comme les gaines d'aération protegeant les tuyaux de service; ce qui constitue les 6 réservoirs presents émargés.
M - Réservoir de securité, torique ou d'autre forme constitué par deux coquilles bombées entières incurvées et évasées avec des concavités orientées dans le même sens vers le haut (30,31) soudées juxtapposées dans le même sens fig.15 et les deux concavités partielles (33) vers le bas, celles-ci portent soudés les écrous de fixation et ancrage du réservoir (22) pour y loger et y fixer le pneu de secours (32) qui peut être logé dans la coquille (30) constituant sa face concave supérieure. Consolidé aussi par un tirant ou axe à large tête (55) pour les cas spéciaux comme ceux ne permettant pas l'emploi de la soupape de surpression avec un étranglèment dans son milieu (65) précalculé pour lacher progressivement à une certaine pression. Il est completé par une de nos nouvelles brides.

## Revendications

1. Réservoir de sécurité pour G.P.L. pour automobiles à bicarburation de toute forme ou notamment torique, destiné à encaisser les surpressions et à être positionné souvent à l'emplacement du pneu de secours, composé de deux coquilles (1 et 2) ou (34/35 ou 30/31) et d'une partie centrale (17,19, 25,73, 74, 75, 76, 84 et 87) évasées (4) et qui peut être munie de languettes d'accouplement (7), caractérisé par le fait d'être muni d'une des brides multiples (8 a, b et d) mâles pouvant être situées à l'extérieur de l'habitacle, ou (c) ensemble femelle rentrant dans le réservoir et pouvant communiquer avec l'extérieur, comportant comme les mâles, simultanément un orifice (10) pour une vanne dite "polyvanne" et un orifice (11) pour une vanne de surpression à proximité immediate, ces brides ayant une forme générale d'ove se retrécissant autour de la surface de diamètre inférieur de la vanne de sécurité, l'ove de la bride d) etant étranglée entre les deux orifices (10 et 11) et en ce que le réservoir comporte une seule découpe destinée à recevoir l'une de ces brides multiples et que ces brides peuvent être obtenues par coulée, par emboutissage, mixte ou autre.

2. Réservoir selon la revendication 1, caractérisé en ce qu'une surface arrière (15) des trois brides mâles (a, b et d) est de forme concave et que celle avant (15'), affleurante de la bride femelle rentrante dans le réservoir, sera convexe (15'), afin de correspondre à celle du réservoir et en ce que celles-ci présentent une forme incurvée correspondante à la forme de la surface du réservoir.

3. Réservoir selon la revendication 2, caractérisé en ce que, si les brides sont disposées en partie basse du réservoir, la vanne de surpression est prolongée intérieurement par un tuyau (14) orienté vers le haut du réservoir jusqu'au niveau de la phase gazeuse située à la partie supérieure de celle liquide.

4. Réservoir selon la révendication 2, caractérisé en ce que l'ensemble bride femelle (c) est muni d'un couvercle étanche abattant en deux parties amovibles (49 et 50) communiquant indiréctement avec l'air libre par les embouts (53) prévus pour le montage intérieur au vehicule.

5. Réservoir selon la revendication 4, caractérisé par son amovibilité grace à notre ensemble enfichable (9) appliqué: au couvercle (49/50) de l'ensemble femelle ou au capot (42) avec ses verrouillages (58) pour les brides mâles et la forme d'ove, aussi de sa bague (56) excluant toute inversion et assurant l'étanchéité par le joint (57) contenant aussi une gaine ou conduit d'aération (12) et les deux tuyaux ou conduits du GPL munis de joints d'étancheité (13) permettant la tenue, l'accouplement rapide ou le desaccouplement à sa fiche ou prise mâle (9') qui s'y raccorde, en s'y verrouillant par les bloquages (43), à l'installation fixe et rigide de la voiture par une gaine ou conduit d'aération et des tuyaux souples et que ces opérations sont facilitées par des poignées ou des supports latéraux (63) de soutenement adaptables en hauteur et largeur.

6. Réservoirs de securité (A,B,D et I) selon la revendication 1, caractérisés en ce qu'il comportent une partie centrale (25) en tube d'acier, embouti en une seule pièce, avec au milieu une ou plusieurs ondes de détente, la (75) avec des ondes un peu en arc dont la poignée serait marquée par une petite onde, la (76) avec des ondes presque sinusoidales, la (73) avec une onde divergeant sensiblement en arc avec une large poignée, la (25) avec une courbe divergeante, toutes avec une patte de fixation (6) munie d'un orifice (3) pour la tige de fixation existante dans le logement du pneu de secours ou possibilité d'écrous (22 et 36).

7. Réservoirs de securité (K et L) selon la revendication 1, caractérisés en ce qu'ils comportent une partie centrale composée de deux rondelles d'acier embouties à l'identique en cônes, et avec les parties medianes ondulées (17) pour (L) et lisses (19) pour (K), qui se rétrécissent graduellement vers les pointes tronquées des cônes, dont les surfaces circulaires (16) soudées en opposition et le fermant, ont un orifice (18) renforcé par un tube (20), permettant notamment le passage de la tige de fixation du pneu de secours ou possibilité d'ancrage par des écrous (22 et 36) L'ensemble assumant un peu la forme d'un sablier.

8. Réservoirs de securité C, E, E' et F selon la révendication 1, caractérisés par ce qu'ils comportent des parties centrales (74 et 84) constituées par deux assiettes (79) évasées, soudées à un tube courbé, divergent dans les (84 et 73) et convergent dans les (74 et 87) et munies d'orifices (86) dans les versions F et E' augmentant la contenance.

9. Réservoirs de securité A', B', D', I', K',L' et E' selon la révendication 6 ou 7, caractérisés en ce que leurs parties centrales sont fermées par deux disques soudés aux parties plus externes des évasements (4 ou 7) supérieur et inférieur, percées (86) pour en augmenter la contenance et traversées au milieu par un tuyau étanche (60) afin de permettre le passage de l'aération, des tuyaux du GPL et de la tige de fixation pneu.

10. Réservoir de securité M selon la revendication 1, caractérisé en ce qu'il est constitué par deux coquilles bombées (30 et 31) entières, avec parties de liaison incurvées et évasées avec des concavités orientées dans le même sens vers le haut, soudées juxtaposées et les deux concavités partielles (33) vers le bas, portant aussi les écrous d'encrage du réservoir (22 et 32). Sa face concave supérieure (30), pouvant loger et par l'écrou (32) bloquer le pneu de secours; consolidé aussi par un tirant à large tête (55) étranglé à son milieu (65) et calculé pour lacher au delà d'une certaine pression.

11. Réservoirs de securité (G et H) selon la revendication 1, caractérisés en ce qu'il sont constitués de deux coquilles entières (34 et 35) soudées contraposées, avec parties de liaison incurvées et évasées et que les concavités (34 et 35) sont orientées dans le même sens vers le bas et inversement vers le haut pour les concavités (34 et 37), et qu'il peut être traversé en son milieu par un tuyau (60) dans la version H), prévu entre autre pour sa fixation par la tige du pneu, ou pouvant être muni d'écrous péripheriques aux courbes (22 et 36).

## Patentansprüche

1. Flussiggasicherheitstank für L.P.G. für fahrzeuge mit zwei brennstoffsistemen in allen form bekontlich toroid, für überdrunkbestimmen und oft stehen im plätzchen dem reserverad, bildet bei zwei shales (1 und 2) oder (34/35 oder 30/31) uns einen hauptteil (17,19,25,73,74,75,76,84 und 87) ausgeweitet (4) und einformenet bei schlagenkuppelungenen (7), charakteristischet an bildet bei multiplus männlichen flanschen (8a,b und d) begabt stheen in äussere seite dem auto, oder (c) weiblich ineinbringen satz in den tank und begabt sein kommunizieren mit äussere bildet bei den männlich, zugheich eine öffnung (10) fur einen multiplum staubrett gesagt "polyvanne" und eine öffnung (11) für eine überdruchstaubretten in nächster, diesen multiplus flanschen habt ein eiform sichverengen umher den plan dem mederer weite dem überdruchstaubrett, die ei dem flansche (d) sich/stein/stadt veregenet unter die zwei öffnungen (10 und 11) und die tank bildet bei eine ausgeschnitte, bestimmt für eine"multimplum flansche" und diesen flanschen sint begabt bei schmalzen, pressen, gemischt auf ander.

2. Flüssiggassicherheitstank nach aunspruch 1, charakteristischt an eine planzüruckseite (15) dem drei malenflanschen (a,b und d) ist konkavseite und diese nivellierent bekommen vor (15') dem weiblich inheinbringen flansche in den tank, vierd konvexe (15'), in verbindung mit den form dem tank plan.

3. Gastank nach den aunspruch 2, mit das charakteristischt an, sollen den fanschen sint begabt in unterhalb dem tank, die überdruck staubrett ist inneres prolongiert bei eines knierohes (14) richtent nach obertank zu den gas stand stehend an flussigstchende.

4. Gastank nach aunspruch 2, mit das charakteristischt an, die weibliche flansche (c) habt ein obnehmbar zustopfenbedecken in zwei absetzbare teile (49,50) indirektlich kommunizierten mit äussere bei den flanschen (53) für den innernen einbauen in den auto.

5. Gasd tank nach aunspruch 4, mit das charakteristischt an er zerlegbar mit unsere satz doppelstecker (9) bildet zu bedecken (49/50)dem satz weiblich oder zu den flansh (42) mit ihren riegeln (58) für dem männlichen flaschen und die einform, auch bei ihren stebringen (56) nicht inversion auszuführen und zustopfenen machenen bei das dichtung (57)enthaltemt auch ein luftzuführ (12) und das zwei kanalen dem LPG begobt dem dichtungen zustopfenen (13) für das schneller kuppelung und das auskuppelung mit ihre doppelstecker auch männlich (9') fur kuppelung, bildt bei blockierelnen(43), zu den steif anlage dem auto bei ein Luftzufuhr und den kanalen biegsam, und dieser arbeitsgang sie leichtigkeit mir dem handgriff auf den ständern (63) anwendbaren bei höhe und breite trägeren.

6. Flüssiggassicherheitstanken (A,B,D und I) nach aunspruch 1, charakteristischt an sie/ihren eine hauptteil haben, bei stahl kanal pressend in eins stück, und in die mitte, eine auf mancher expansion welle, die (75) mit den wellen bogenförmig und ihre handgriffhabe eine kleines welle, die (76) mit den wellesn beissahen sinusen, die (73) mit eine divergierende welle, alles mit einer träger (6) mit ein offnung (3) fur die festmachen spindel existent in den wohnung dem reserverad, oder mit bremssechraube (22 und 36)

7. Flüssiggassicherheitstanken (K,L) nach aunspruch 1, charakteristischt an sie eine bestchend hauptteil haben, bildet bei zwei sthale scheibe pressenet in kegelförmig, _und mit klein welle in den mitte (17) fur (L) und fläche (19) für (K), sich verengennach den kegelstumpfe spitze, mit den runden flächen (16) zusammen schweissent gegenteil und sie verstopfen, eine offnung (18) habt bei ein/es kanal (20) verrstärkent, für das spindeltes festmachen dem reserverad auch ankergerät beimit bremsschraube (22 und 36); die satz gegen sandbüchse förmige habe.

8. Gastank (C,E,E' und F) nach aunspurch 1, charakteristischt an sie den haupfteilen (74 und 84) haben, bildet aus zwei ausgeweiteten suppentelleren (79), zusammenschweissrnt auf bieget kanal, ausseinandergehtin die (84 und 73) und konvergieren in die (74 und87) und mit öffnungen in die ausslegungen (F und E), den inhalt vergrossen.

9. Gastank (A',B',D',I',K',L', und E') nach aunspruch 6 auch 7, charakteristischt an ihren haupteilen sind verstopft bei zwei scheibenzumecht zusammenschweissent gegen die mehreren ausserlichen teilen (4 oder 7) höher gelegen und unter gelegen, durchlöchernt (86) für zuvergrossen die inhalt, und durchquerent in der mittel bei ein zustopfen kanal (60) für zu ein luftzufuhr, die LPG kanalen und für das zu spindel der reserverad festmachen.

10. Gastank (M) nach aunspruch 1, charakteristischt an sie ist bildet bei zwei einteilige rundliche shale (30,31), mit verbindungen teilen rundlich und ausserlicht mit konkav teilen orienterenten auf dieselbe weise gegen über zusammenschweissent dicht nebenand und die zwei mehrteilingen konkaviteten (33) gegen unter,bildet auch den bremsschraube (22,32) den gastank. Ihr konkav teil hore (30), für wohnung und bei schraube (32), fest anzienen der reserverad; befestigt auf bei eine spindel mit grosse kopf (55) begrenzt in die mitte und kalkulieret für loslassen über einen dunck nachgeben.

11. Gastank (G und H) nach aunspruch 1, charakteristischt an bildet bei zwei einteilig shale (34 und 35) zusammenschweissent gegen gelagt, mit verbindungen teilen rundlichen und ausserlichen,und die konkavteilen (33 und 35) sind orienterent auf dieselbeweise gegen unter, und umgekehrt gegen über fur die konkavteilen (34 und 37), und durchqueren in der mittel bei ein kanal (60) in der ausslegung H), bildet auch fur den spindel festmachen den reserverad, oder kahnt bildet mit schrabe umfangs dem rundteilen (22 und 36).

## Claims

1. Safety tank for L.P.G. for dual-fuel carburetion vehicles of every form or toric, destined to take the over pressure and to be often placed at place of replacement wehel, composed by two shells (1 and 2) or (34/35 or 30/31) and of one central part (17, 19, 25, 73, 74, 75, 76, 84 et 87) flared/opening of (4) and able to be equiped of coupling tongues (7) caracterized by the fact to be equiped with one "multiple filling hole/flange" (8a, b, et d) male ables to be placed outside of the car, or (c) female set getting into the tank being able to comunicate with the exterior, equiped as the males, simultaneosly, by one orifice (10) for one valve called "polyvalve"and one orifice (11) by one security valve nearest, these filling holes having a generic oval form restricted aoround of the surface with the inferior diametre of secutity valve, the oval of the filling hole (d) being restrictes into the two orifices (10 and 11) and caracterized by trhe fact that the tank has only one cut destined to receive one of these multiple filling holes and that these can be made by melting or pressing or mixed or other process.

2. A tank according to claim 1, wherein one back surface (15) of the three males Filling holes (a, b and d) as a concave form and the anterior (15') external of these going into the tank filling hole, will be convexe (15'), to connect with these of the tank having the curved form in corrispondence to the form of the surface of the tank.

3. A tank according to claim 2, which, if is filling holes are secured on low part of the tank, the security valve is prolonged in the interior of the same by one tube (14) turned up where is the gaz aerea of the tank, situated over up the liquid.

4. A tank according to claim 2, wherein the female filling hole set (c), is equiped with one airtight tip-up cover made of two parts (49, 50) detachable, comunicating indirectly with the atmosphere by the filling hole (53) wich is provided for an internal equipment for the car.

5. A tank according to claim 4, wich is dismanteleble and equiped by our connectable set (9), fixed: on the cover (49/50) of the female set, or to the capot (42) with is locking (58) for the male set and also the oval form of is perifery (56) excluding each invertion and insuring the airtight by a joint (57) equiped also by one air duct (12) with the two others tubes for the LPG and is airtight joints (13) insuring the pressure, and the quick coupling or disconnecting to is male connection (9') here connecting and locking by the lock (43), at the fixed and rigid gaz equipment of the car, by the air duct and the flexible tubes, and these operations are facilitated by laterals handles or supports (63) for sustaining adaptables on height and width.

6. Security tanks (A B D and I) according to claim 1, wich are equiped by one central part (25) in steel tube, pressed on one part, with at middle one or more expansion waves, the (75) with waves a little forming bow and with the handle with a little wave, the (76) with sinus waves, the (73) with one divergent wave same a bow with a large handle, the (25) with a divergent wave, every with one support for fixing (6) with one orifice (3) to receive the fixing stick existent into the same for the replacement pneumatic or possibility of fixing nuts (22,23)

7. Security tanks (K, L) according to claim 1, wherein their central parts are composed by two stell parts identically pressed on cones, with waves (17) on the median part for (L) and flat (19) for (K), each gradually retressing to the top forming tronqued cones, where the circular surfaces (16) welded in opposition and closing, has one orifice (18) reinforced by a tube (20), for the fixing stick of replacement wheel or possibility of fixing nuts (22,36). The set having more or less the form of hourglass.

8. Security tanks (C E E' F) according to claim 1, wherein thei central parts (74, 84) made by two flared discs (79), welded to a courbed tube , divergent on the (84 and 73) and convergent on the (74 and 87) and equiped of orifices (86) on the versions (F and E') increasing the capacity.

9. Security tanks (A' B' D' I' K' L', E') according to claim 6 or 7, which central parts are closed by two discs welded to the exterior of the up and back flares (4 or 7), and perforated (86) to increase the capacity, equiped at middle by one airtight tube (60) for the aeration and LPG tubes and fixing pneumatic stick.

10. Security tank (M) according to claim 1, which is composed by two full rounded shells (31/31), with curved and flared joining parts with his concavitys oriented to same up direction, juxtaposed welded with the two little concavities (33) going back, equiped also the tanx fixing nuts (22,32). his superior concave face (30), being able to receive and fix the replacement pneumatic by the nut (32); reinforced also by one axe with a large head (55) restricted at middle (65) and calculated to snap after a determined pressure.

11. Security tanks (G,M) according to claim 1, which are composed by two full rounded shells (34,35) welded in opposition, with curved and flared joining parts and with the concavities (33, 35) oriented at same back direction and at contrary to up the concavities (34, 37), and may be traversed in the middle by a tube (60) for the (H) version, provided also for the fixing by the stick of the pneumatic, or by nuts peripheryc at courbs (22, 36).
